# EUROPEAN PATENT APPLICATION

(11) **EP 4 834 668 A1**
(43) Date of publication of application: **04.11.2026**
(21) Application number: 24910000.9
(22) Date of filing: 10.09.2024
(51) Int. Cl.: B60R 21/231, B60R 21/2334

(54) **AIRBAG**

(30) Priority: 28.12.2023 CN 202323621099 U
(71) Applicant: Autoliv Development AB, 44783 Vargarda (SE)
(72) Inventor: LIU, Ke, Shanghai 201807 (CN); YANG, Qunyin, Shanghai 201807 (CN); MENG, Qiang, Shanghai 201807 (CN); SHENG, Chenhan, Shanghai 201807 (CN); WANG, Ting, Shanghai 201807 (CN)
(74) Representative: Feucker, Max Martin
(86) International application number: PCT/CN2024/118018
(87) International publication number: WO 2025/139054

(57) **Abstract**

The present invention provides a safety airbag. The safety airbag includes an air bag, the air bag having a deployed state and a stowed state, wherein the air bag includes a front panel, a rear panel, and a tether, and a recessed portion is provided at the front panel when in the deployed state. The tether includes a first end and a second end, the first end is connected to the front panel at the recessed portion in a first direction, the second end is connected to the rear panel in a second direction, and the first direction is different from the second direction, so that when the air bag is in the deployed state, the tether applies a force toward an inner side of the air bag to the front panel by means of twisting.

## Description

### TECHNICAL FIELD

The present invention relates to a safety device in a vehicle, and specifically to a safety airbag.

### BACKGROUND ART

Among actual traffic accidents, two-vehicle collision accidents are very common. Therefore, safety airbags are widely used in existing vehicles as a safety device for protecting occupants. The safety airbags include, for example, a safety airbag arranged in a steering wheel, a safety airbag arranged in a dashboard, and an overhead safety airbag arranged at the top of a vehicle. When the vehicle undergoes a collision or is impacted, a gas generator of the safety airbag receives a signal transmitted by means of a wire harness connected to the gas generator, thus bringing about a burst. Then, gas generated from the burst rapidly inflates a folded air bag of the safety airbag, and the inflated air bag expands to protect an occupant from injury resulting from the impact.

Vehicle collisions include frontal collisions and oblique collisions. The probability of oblique collisions in which the front surface of the vehicle is collided with obliquely is relatively high. However, during an oblique collision, the head and the chest of the occupant may slide off of the air bag of the safety airbag. Therefore, the head and the chest of the occupant are no longer located within a protection region of the air bag of the safety airbag, and instead hit other structures in the vehicle and thus get injured. As a result, since it is difficult for safety airbags in the prior art to guarantee that the occupant is located within the protection region of the airbag during a collision, safety airbags thus have low reliability and safety.

Therefore, there is a desire for a safety airbag having higher safety, design flexibility, and lower costs.

### SUMMARY OF THE INVENTION

The present invention provides a safety airbag, comprising:
an air bag, the air bag having a deployed state and a stowed state;
wherein
the air bag comprises a front panel, a rear panel, and a tether, and a recessed portion is provided at the front panel when in the deployed state; and
the tether comprises a first end and a second end, the first end is connected to the front panel at the recessed portion in a first direction, the second end is connected to the rear panel in a second direction, and the first direction is different from the second direction, so that when the air bag is in the deployed state, the tether applies a force toward an inner side of the air bag to the front panel by means of twisting.

According to an embodiment of the present invention, the air bag further comprises a first side panel and a second side panel, and the first side panel and the second side panel are connected to two opposite sides of the front panel and the rear panel, respectively.

According to an embodiment of the present invention, the front panel and the rear panel are formed from a first fabric, the first side panel is formed from a second fabric, and the second side panel is formed from a third fabric, and the second fabric and the third fabric are connected at opposite edges of the first fabric, respectively, and are provided to be completely identical or mirror-symmetrical.

According to an embodiment of the present invention, the first fabric is configured in an elongated shape and has narrower end portions and an expanded section located between the end portions, and the expanded section is used to form the recessed portion.

According to an embodiment of the present invention, the first direction is defined as a vertical direction, the second direction is defined as a horizontal direction, and the first end of the tether is twisted by a quarter turn relative to the second end.

According to an embodiment of the present invention, the air bag further comprises a downwardly extending portion, and the downwardly extending portion is located at a lower side of the recessed portion when in the deployed state.

According to an embodiment of the present invention, the second fabric and the third fabric each comprise a main body portion and a first branch portion and a second branch portion connected to the main body portion, the first branch portion is used to define the recessed portion together with the expanded section of the first fabric, and the second branch portion is used to define the downwardly extending portion together with the end portions of the first fabric.

According to an embodiment of the invention, the first fabric comprises a first marking portion and a second marking portion, the first marking portion is positioned on the expanded section for connecting the first end of the tether, and the second marking portion is positioned at a certain distance from the first marking portion for connecting the second end of the tether.

According to an embodiment of the present invention, the tether is formed from a fourth fabric, the first end of the tether is configured to form a predetermined angle with a width direction of the tether, and the first marking portion and the second marking portion are configured to have dimensions corresponding to the first end and the second end of the tether, respectively.

According to an embodiment of the present invention, the safety airbag further comprises a gas generator provided at the rear panel.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIG. 1 shows a safety airbag according to an embodiment of the present invention.
FIG. 2 shows a method for manufacturing a safety airbag according to an embodiment of the present invention.

### DETAILED DESCRIPTION OF PREFERRED EMBODIMENTS

Specific embodiments of the safety airbag according to the present invention will be described below with reference to the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

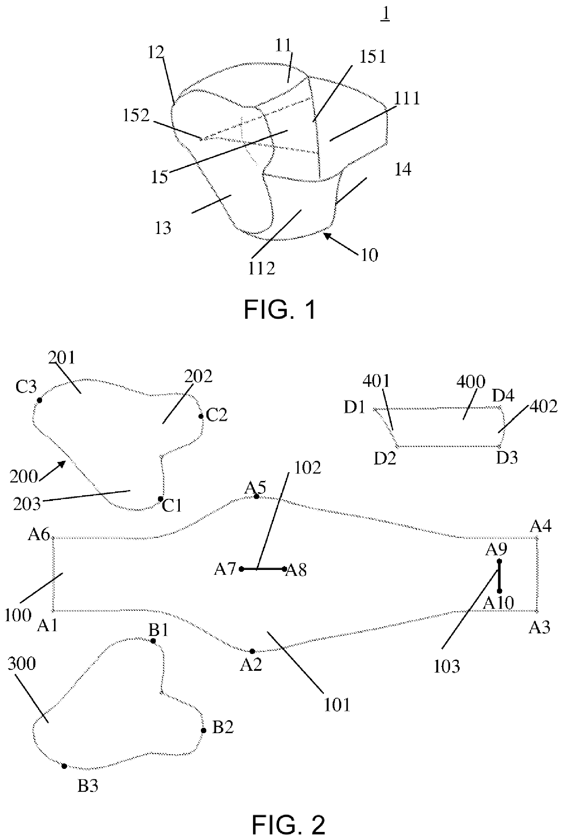

FIG. 1 shows a safety airbag according to an embodiment of the present invention. The safety airbag according to an embodiment of the present invention is described below with reference to FIG. 1.

As shown in FIG. 1, the safety airbag 1 of the present invention includes an air bag 10 and a gas generator (not shown). The air bag 10 has a deployed state and a stowed state, and the gas generator is used to inflate the air bag 10 so that the air bag 10 expands and enters the deployed state. In order to clearly illustrate the structure of the air bag 10, the air bag 10 shown in FIG. 1 is in the deployed state, and the right side surface of the air bag 10 shown in FIG. 1 faces an occupant when in use.

With continued reference to FIG. 1, it can be clearly observed that the air bag 10 includes a front panel 11, a rear panel 12 and a tether 15, and when the air bag 10 is in the deployed state, a recessed portion 111 is provided at the front panel 11, the recessed portion 111 being used to accommodate the head of an occupant. In one example, the gas generator may be provided at the rear panel 12, and specifically, the gas generator may inflate the air bag 10 via a vent on the rear panel 12.

The tether 15 includes a first end 151 and a second end 152, and in the safety airbag 1 of the present invention, the first end 151 of the tether 15 is connected to the front panel 11 at the recessed portion 111 in a first direction, and the second end 152 is connected to the rear panel 12 in a second direction. In the embodiment shown in FIG. 1, the first direction is defined as a vertical direction, and the second direction is defined as a horizontal direction. Moreover, in this case, the first end 151 of the tether 15 is twisted by a quarter turn relative to the second end 152. Of course, this is merely an example. The first end 151 of the tether 15 may be twisted by more turns relative to the second end 152. More specifically, as clearly shown in FIG. 1, the first end 151 of the tether 15 is provided to be connected to a section of the front panel 11 at an approximately middle position of the section in the width direction along the vertical direction, so that a force toward an inner side of the air bag 10 is applied to the front panel 11 at the section when the air bag 10 is inflated and deployed, thereby forming a recessed portion 111 on the front panel 11. The recessed portion 111 forms a crease in the height direction of the air bag 10 via the first end 151 of the tether 15 (at the position indicated by the vertical line shown in FIG. 1), and the crease divides the recessed portion 111 into two substantially symmetrical parts in the width direction of the air bag 10. It can be understood that the recessed portion 111 is recessed at the crease with respect to both sides, therefore, when the head of the occupant is accommodated in the recessed portion, the head of the occupant can be prevented from moving from the air bag 10 in the width direction and thereby sliding off to leave the air bag 10 during the occurrence of a vehicle collision, such as an oblique collision.

It should be noted that the above embodiment is merely an example. The first direction is not limited to the horizontal direction and the second direction is not limited to the vertical direction. In the safety airbag of the present invention, the first direction is defined to be different from the second direction with respect to the first end and the second end of the tether, so that the tether can apply a force toward the inner side of the air bag to the front panel by means of twisting when the air bag is in the deployed state. It can be understood that at least a section of the tether in the twisted state is in or approximately in the vertical direction. When the air bag is deployed, since the partial section of the tether is positioned in the vertical direction, there is a greater freedom of movement for the tether in the width direction of the vehicle when the occupant comes into contact with the air bag. In this way, during the occurrence of an oblique collision, the vehicle itself tends to rotate upward in the width direction thereof. Therefore, for an air bag having a tether with a partial section in the vertical direction, the air bag and the occupant protected thereby tend to rotate in synchronization with the vehicle, thereby preventing the head of the occupant from leaving the air bag and thus having hard contact with parts in the vehicle.

In addition, when the above safety airbag is mounted, for example, in a dashboard to protect a front occupant, the head of the occupant substantially moves in synchronization with the vehicle before a collision event. During the collision event, a traveling direction and speed of the vehicle may change dramatically and abruptly. When such a collision triggers the safety airbag to inflate the air bag, the air bag accelerates in a specific direction of the vehicle. That is, the air bag expands backwards from the dashboard. Since the collision event itself has changed the direction of travel of the vehicle, the occupant may no longer move in synchronization with the vehicle, even under the restraint of a modern three-point seatbelt. In addition, the occupant may be harmed to a certain extent when hitting the air bag of the safety airbag. For example, hitting the air bag of the safety airbag may cause the head of the occupant to rotate in an accelerated manner relative to the spine. Such rotational acceleration or deceleration may cause injury to the occupant. In other words, when the occupant hits the air bag of the safety airbag, the head of the occupant may rotate or twist significantly, and this can cause an injury. For example, when the front occupant, during a collision event, moves in a forward direction and hits the air bag of the safety airbag, the head of the occupant may rotate about a longitudinal axis of the head with considerable force. Therefore, a safety airbag needs to have the function of reducing the rotational speed of the head of the occupant during a collision event so as to reduce the risk of a traumatic head/brain injury caused by rapid rotation of the head of the occupant. The safety airbag of the present invention has the aforementioned function, which will be described in detail below.

As shown in FIG. 1, in the air bag 10 of the safety airbag of the present invention, a low fabric tension region is generated in the recessed portion 111, and a high fabric tension region is generated in the region surrounding the low fabric tension region. Specifically, the low fabric tension region is located at the connection position of the first end 151 of the tether 15 of the air bag 10, and the high fabric tension region is located at both sides of the front panel 11 located at the recessed portion 11. The low fabric tension region can reduce the probability that the air bag 10 causes the head of the occupant to rotate. The high fabric tension region provides support so as to prevent or restrain the occupant from being ejected from the air bag 10. Therefore, in the safety airbag of the present invention, the air bag provided with the recessed portion can accommodate the head of the occupant and provide support to side surfaces of the head, so as to counteract a force on the head that may cause the head to rotate clockwise or counterclockwise about the longitudinal axis of the head, thereby enabling the occupant to be reliably protected.

In addition, in the embodiment of the present invention, as shown in FIG. 1, the air bag 10 further includes a downwardly extending portion 112, and when in the deployed state, the downwardly extending portion 112 is located on a lower side of the recessed portion 111. It can be understood that the downwardly extending portion 111 of the air bag 10 can be used to protect the abdomen of the occupant.

In addition, as shown in FIG. 1, the air bag 10 further includes a first side panel 13 and a second side panel 14, and the first side panel 13 and the second side panel 14 are connected to two opposite sides of each of the front panel 11 and the rear panel 12, respectively. The front panel 11, the rear panel 12, the first side panel 13, and the second side panel 14 together define the air bag 10, and the first side panel 13 is connected (e.g., via a stitching line) at one side edge of the front panel 11 and the rear panel 12, and the second side panel 14 is connected (e.g., via a stitching line) at the other side edge of the front panel 11 and the rear panel 12. According to an embodiment of the present invention, the front panel 11 and the rear panel 12 are formed from a first fabric 100, the first side panel 13 is formed from a second fabric 200, and the second side panel 14 is formed from a third fabric 300. The second fabric 200 and the third fabric 300 are connected at opposite edges of the first fabric 100, respectively. The second fabric 200 and the third fabric 300 may be provided to be completely identical. Of course, the second fabric 200 and the third fabric 300 may also be provided to be mirror-symmetrical. The safety airbag of the present invention is not limited in this regard. Hereinafter, a method for manufacturing a safety airbag of the present invention will be described in detail with reference to FIG. 2.

FIG. 2 shows a method for manufacturing a safety airbag according to an embodiment of the present invention. The method for manufacturing the safety airbag according to the embodiment of the present invention will be described below with reference to FIG. 2.

As shown in FIG. 2, first, four pieces of fabric, namely, a first fabric 100, a second fabric 200, a third piece of fabric 300, and a fourth fabric 400, are provided.

The first fabric 100 is configured in an elongated shape and has narrower end portions and an expanded section 101 located between the end portions, and the expanded section 101 is used to form the above-mentioned recessed portion 111. The first fabric 100 includes a first marking portion 102 and a second marking portion 103. The first marking portion 102 is positioned on the expanded section 101, the first marking portion 102 is used for connecting the first end 151 of the tether 15, and the second marking portion 103 is positioned at a certain distance from the first marking portion 102 for connecting the second end 152 of the tether 15. The first marking portion 102 and the first end 151 of the tether 15 have the same dimensions, and the second marking portion 103 and the second end 152 of the tether 15 have the same dimensions.

The second fabric 200 and the third fabric 300 are configured as two pieces of identical fabric. Using the second fabric 200 as an example, the second fabric 200 includes a main body portion 201 and a first branch portion 202 and a second branch portion 203 connected to the main body portion 201. As shown with reference to FIG. 1, the first branch portion 202 is used to define the above-mentioned recessed portion 111 together with the expanded section 101 of the first fabric 100, and the second branch portion 203 is used to define the downwardly extending portion 112 together with the end portions of the first fabric 100.

In addition, the fourth fabric 400 is used to form the tether 15. The fourth fabric 400 has a left end 401 and a right end 402, the left end 401 corresponds to the first end 151 of the tether 15, and the right end 402 corresponds to the second end 152 of the tether 15. It can be clearly observed that the left end 401 of the fourth fabric 400 is provided obliquely with respect to the width direction of the fourth fabric, and the right end 402 of the fourth fabric 400 is provided substantially in the width direction of the fourth fabric. In this way, the first end 151 of the tether 15 is configured to form a predetermined angle with the width direction of the tether 15. It can be understood that by adjusting the predetermined angle formed by the first end of the tether with respect to the width direction of the tether, the variation of the recessed depth of the recessed portion 111 in the height direction of the air bag 10 can be adjusted, which further improves the design flexibility of the air bag in the safety airbag of the present invention.

The method for manufacturing the air bag of the safety airbag according to the embodiment of the present invention further includes the following steps:
marking six feature points A1, A2, A3, A4, A5, and A6 on side edges of the first fabric 100;
marking three feature points C1, C2, and C3 on side edges of the second fabric 200, and marking three feature points B1, B2, and B3 on side edges of the third fabric 300;
marking four feature points D1, D2, D3, and D4 on side edges of the fourth fabric 400;
causing points A1, A2, and A3 to coincide with B1, B2, and B3, respectively, and then connecting (e.g., stitching or bonding) edge line A1A2A3 and edge line B1B2B3 together; causing points A4, A5, and A6 to coincide with points C1, C2, and C3, respectively, and then connecting (e.g., stitching or bonding) edge line A4A5A6 and edge line C1C2C3 together;
causing points D1 and D2 to coincide with points A7 and A8, respectively, and connecting (e.g., stitching or bonding) edge line D1D2 and edge line A7A8 together; and causing points D3 and D4 to coincide with points A9 and A10, respectively, and connecting (e.g., stitching or bonding) edge line D3D4 and edge line A9A10 together.

It should be noted that the aforementioned method for manufacturing the air bag of the safety airbag of the present invention is merely an example, and those skilled in the art could adjust the sequence of the steps or even delete steps of the aforementioned method according to actual requirements.

Therefore, in the safety airbag according to the present invention, the number of pieces of fabric used in the air bag is small, and the overall shape of the air bag can be changed by individually designing each piece of fabric, thereby improving the design flexibility of the air bag, and enabling the safety airbag of the present invention to be adapted to different use environments and dashboards of different vehicles.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A safety airbag (1), comprising:
an air bag (10), the air bag (10) having a deployed state and a stowed state; and
**characterized in that**:
the air bag (10) comprises a front panel (11), a rear panel (12), and a tether (15), and a recessed portion (111) is provided at the front panel (11) when in the deployed state; and
the tether (15) comprises a first end (151) and a second end (152), the first end (151) is connected to the front panel (11) at the recessed portion (111) in a first direction, the second end (152) is connected to the rear panel (12) in a second direction, and the first direction is different from the second direction, so that when the air bag (10) is in the deployed state, the tether (15) applies a force toward an inner side of the air bag (10) to the front panel (11) by means of twisting.

2. The safety airbag (1) according to claim 1, wherein the air bag (10) further comprises a first side panel (13) and a second side panel (14), and the first side panel (13) and the second side panel (14) are connected to two opposite sides of each of the front panel (11) and the rear panel (12), respectively.

3. The safety airbag (1) according to claim 2, wherein the front panel (11) and the rear panel (12) are formed from a first fabric (100), the first side panel (13) is formed from a second fabric (200), and the second side panel (14) is formed from a third fabric (300), and the second fabric (200) and the third fabric (300) are connected at opposite edges of the first fabric (100), respectively, and are provided to be completely identical or mirror-symmetrical.

4. The safety airbag (1) according to claim 3, wherein the first fabric (100) is configured in an elongated shape and has narrower end portions and an expanded section (101) located between the end portions, and the expanded section (101) is used to form the recessed portion (111).

5. The safety airbag (1) according to claim 1, wherein the first direction is defined as a vertical direction, the second direction is defined as a horizontal direction, and the first end (151) of the tether (15) is twisted by a quarter turn relative to the second end (152).

6. The safety airbag (1) according to claim 4, wherein the air bag (10) further comprises a downwardly extending portion (112), and when in the deployed state, the downwardly extending portion (112) is located on a lower side of the recessed portion (111).

7. The safety airbag (1) according to claim 6, wherein the second fabric (200) and the third fabric (300) each comprise a main body portion and a first branch portion and a second branch portion connected to the main body portion, the first branch portion is used to define the recessed portion (111) together with the expanded section (101) of the first fabric (100), and the second branch portion is used to define the downwardly extending portion (112) together with the end portions of the first fabric (100).

8. The safety airbag (1) according to claim 4, wherein the first fabric (100) comprises a first marking portion (102) and a second marking portion (103), the first marking portion (102) is positioned on the expanded section (101) for connecting the first end (151) of the tether (15), and the second marking portion (103) is positioned at a certain distance from the first marking portion (102) for connecting the second end (152) of the tether (15).

9. The safety airbag (1) according to claim 8, wherein the tether (15) is formed from a fourth fabric (400), the first end (151) of the tether (15) is configured to form a predetermined angle with a width direction of the tether (15), and the first marking portion (102) and the second marking portion (103) are configured to have dimensions corresponding to the first end (151) and the second end (152) of the tether (15), respectively.

10. The safety airbag (1) according to claim 1, further comprising a gas generator provided at the rear panel (12).
